# EUROPEAN PATENT APPLICATION

(11) **EP 4 322 558 A1**
(43) Date of publication of application: **14.02.2024**
(21) Application number: 21935596.3
(22) Date of filing: 09.04.2021
(51) Int. Cl.: H04W 4/06, H04W 76/27

(54) **MONITORING STATE SWITCHING CONTROL METHOD AND APPARATUS, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: dompatent von Kreisler Selting Werner - Partnerschaft von Patent- und Rechtsanwälten mbB
(86) International application number: PCT/CN2021/086207
(87) International publication number: WO 2022/213369

(57) **Abstract**

A monitoring state switching control method and apparatus, and a storage medium. The monitoring state switching control method comprises: configuring, for a terminal, reception configuration information corresponding to a multicast broadcast service (MBS), the reception configuration information being used for the terminal to receive the MBS by means of discontinuous reception (201); and sending target control information to the terminal, the target control information being used for activating or deactivating the reception monitoring of the MBS of the terminal (202). In the method, a terminal can start or stop the reception monitoring of an MBS according to the instruction of target control information and reception configuration information, thereby better saving the energy consumption of the terminal.

## Description

### TECHNICAL FIELD

The disclosure relates to a field of communication technology, in particular to a method and a device for switching control of a monitoring state, and a storage medium.

### BACKGROUND

In a 5G NR (New Radio Access Technology) system, MBMS (Multimedia Broadcast and Multicast Service) or MBS (Multicast Broadcast Service) can be scheduled and sent in following two ways.

The first way is dynamic scheduling.

The PDCCH (Physical Downlink Control Channel) schedules the PDSCH (Physical Downlink Shared Channel) for transmission. The PDCCH scheduling the MBS is indicated by an MBS-specific scheduling identifier. The MBS-specific scheduling identifier includes but is not limited to a G-RNTI (Group Radio Network Temporary Identifier, an MBS Radio Network Temporary Identifier).

The second way is SPS (Semi-Persistent Scheduling).

A base station configures periodic PDSCH resources, and a terminal receives MBS data through the PDSCH resources.

The MBS can be identified using following MBS identifiers: a TMGI (Temporary Mobile Group Identifier), an MBS Session ID (Identifier), an MBS QoS flow ID, an MBS RB ID (MBS Radio Bearer ID), and an MBS LCH ID (MBS Logical Channel ID).

A sending mode of the MBS can include the following two types.

The first sending model, sending mode 1 (multicast sending).

The terminal enters an RRC (Radio Resource Control) connected (CONNECTED) state to receive reception configuration information corresponding to the MBS, and receives the MBS based on the reception configuration information. A network side sends the reception configuration information corresponding to the MBS to the terminal through terminal specific signaling.

The second sending model, sending mode 2 (broadcast sending).

The terminal can receive the reception configuration information corresponding to the MBS in any of an idle (IDLE) state, an inactive (INACTIVE) state, or a connected (CONNECTED) state, and receive the MBS based on the reception configuration information.

The network side sends the reception configuration information of the MBS to the terminal through system information, such as a SIB (System Information Block), and MBS control channel information, such as MCCH (MBS Control Channel).

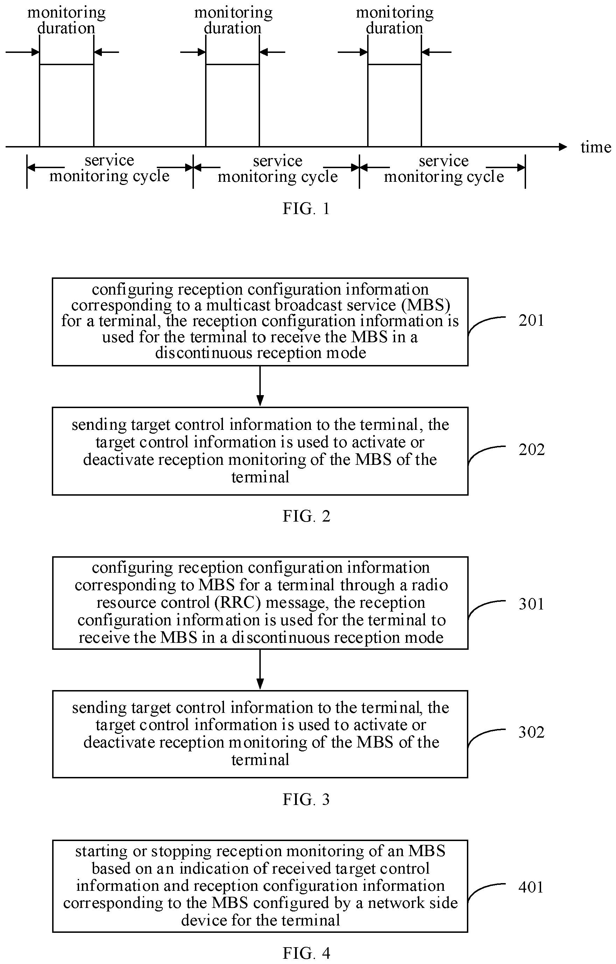

Due to different sending cycles of different MBSs, the network side can configure the terminal to receive different MBSs in a discontinuous mode. That is, different MBSs may correspond to different discontinuous reception configuration information, as shown in FIG. 1.

After the network side configures the reception configuration information corresponding to the MBS for the terminal, the terminal needs to monitor the sending of the MBS, such as monitoring the G-RNTI PDCCH, during an MBS scheduling duration configured by the network, such as a service monitoring duration corresponding to an MBS monitor duration timer (mbsOnDurationTimer).

However, the network side may temporarily stop sending the MBS, while the terminal side still monitors the sending of the MBS according to the MBS scheduling duration previously configured by the network side, resulting in more power consumption on the terminal.

### SUMMARY

To overcome the problems existing in related art, embodiments of the disclosure provide a method and a device for switching control of a monitoring state, and a storage medium.

According to a first aspect of embodiments of the disclosure, a method for switching control of a monitoring state is provided. The method is performed by a network side device, and includes:
configuring reception configuration information corresponding to a multicast broadcast service (MBS) for a terminal, in which the reception configuration information is used for the terminal to receive the MBS in a discontinuous reception mode; and
sending target control information to the terminal, in which the target control information is used to activate or deactivate reception monitoring of the MBS of the terminal.

Alternatively, the target control information is used to activate the reception monitoring of the MBS of the terminal, the target control information includes any one of:
a wake-up signal, target downlink control information (DCI), or a target media access control layer control element (MAC CE);
in which the target control information is used to deactivate the reception monitoring of the MBS of the terminal, the target control information includes any one of:
a go-to-sleep signal, the target DCI, or the target MAC CE.

Alternatively, the target DCI is DCI identified by a power saving radio network temporary identification (PS-RNTI).

Alternatively, the target control information includes at least one of: indication information of the MBS, or activation state information of the MBS;
in which, the indication information of the MBS includes at least one of: an MBS identifier, or an MBS scheduling identifier; in which the MBS scheduling identifier includes at least one of: a dynamic scheduling identifier, or a semi-persistent scheduling identifier;
the activation state information of the MBS includes at least one of: an activated state, or a deactivated state.

Alternatively, configuring the reception configuration information corresponding to the MBS for the terminal includes:
configuring the reception configuration information corresponding to the MBS for the terminal through a radio resource control (RRC) message.

Alternatively, the RRC message includes an initial monitoring state corresponding to the MBS configured for the terminal, the initial monitoring state includes stopping the reception monitoring of the MBS or starting the reception monitoring of the MBS.

Alternatively, a number of MBSs is one or more, and in response to the number of the MBSs is more than one, reception configuration information corresponding to different MBSs are different.

Alternatively, the reception configuration information corresponding to the MBS includes at least one of:
a service monitoring cycle of the MBS;
a first timer used to indicate a service monitoring duration in each service monitoring cycle;
a service-monitoring start position in each service monitoring cycle;
a second timer used to indicate that the network side device has new data to be scheduled;
a third timer used to indicate the terminal to perform a hybrid automatic repeat request (HARQ) feedback; or
a fourth timer used to indicate the terminal to receive data re-transmitted by the network side device.

According to a second aspect of embodiments of the disclosure, a method for switching control of a monitoring state is provided. The method is performed by a terminal, and includes:
starting or stopping reception monitoring of a multicast broadcast service (MBS) based on an indication of received target control information and reception configuration information corresponding to the MBS configured by a network side device for the terminal, in which the target control information is used to activate or deactivate the reception monitoring of the MBS of the terminal, and the reception configuration information is used for the terminal to receive the MBS in a discontinuous reception mode.

Alternatively, the target control information includes at least one of: indication information of the MBS, or activation state information of the MBS;
in which, the indication information of the MBS includes at least one of: an MBS identifier, or an MBS scheduling identifier; in which the MBS scheduling identifier includes at least one of: a dynamic scheduling identifier, or a semi-persistent scheduling identifier;
the activation state information of the MBS includes at least one of: an activated state, or a deactivated state.

Alternatively, starting or stopping the reception monitoring of the MBS based on the indication of the received target control information and the reception configuration information corresponding to the MBS configured for the terminal by the network side device includes:
in response to determining that the target control information is used to activate the reception monitoring of the MBS of the terminal, starting the reception monitoring of the MBS based on the indication of the target control information and the reception configuration information; or
in response to determining that the target control information is used to deactivate the reception monitoring of the MBS of the terminal, stopping the reception monitoring of the MBS based on the indication of the target control information and the reception configuration information.

Alternatively, the method further includes any one of:
in response to determining that the terminal is in a state of the reception monitoring of the MBS being stopped, monitoring the target control information used to activate the reception monitoring of the MBS of the terminal; or
in response to determining that the terminal is in a state of the reception monitoring of the MBS being started, monitoring the target control information used to deactivate the reception monitoring of the MBS of the terminal.

Alternatively, the method further includes any one of:
determining an initial monitoring state corresponding to the MBS based on an indication of a radio resource control (RRC) message sent by the network side device; or
determining an initial monitoring state corresponding to the MBS based on a protocol agreement;
in which the initial monitoring state includes stopping the reception monitoring of the MBS, or starting the reception monitoring of the MBS.

Alternatively, the method further includes:
monitoring the target control information at a target time domain position used to monitor the target control information.

Alternatively, the method further includes any one of:
in response to the target control information being monitored at the target time domain position, and in response to a bit value of the target control information being a first predefined value, determining that the target control information used to indicate to activate the reception monitoring of the MBS of the terminal is monitored; or
in response to the target control information being monitored at the target time domain position, and in response to a bit value of the target control information being a second predefined value, determining that the target control information used to indicate to deactivate the reception monitoring of the MBS of the terminal is monitored.

Alternatively, the method further includes any one of:
in response to the target control information being not monitored at the target time domain position, and in response to determining that the terminal is in a state of the reception monitoring of the MBS being stopped, starting the reception monitoring of the MBS based on the reception configuration information; or,
in response to the target control information being not monitored at the target time domain position, and in response to determining that the terminal is in a state of the reception monitoring of the MBS being started, stopping the reception monitoring of the MBS based on the reception configuration information.

Alternatively, an offset value of the target time domain position relative to a specified time domain position in each target cycle is a predetermined offset value.

Alternatively, a cycle duration of the target cycle is a positive integer multiple of a service monitoring cycle of the MBS or a positive integer multiple of a duration of a paging cycle.

Alternatively, the specified time domain position includes at least one of:
a service-monitoring start position of the MBS, a paging-monitoring start position, or a change-starting indication position of a multicast control channel.

Alternatively, a number of MBSs is one or more, and in response to the number of the MBSs is more than one, reception configuration information corresponding to different MBSs are different.

Alternatively, the reception configuration information corresponding to the MBS includes at least one of:
a service monitoring cycle of the MBS;
a first timer used to indicate a service monitoring duration in each service monitoring cycle;
a service-monitoring start position in each service monitoring cycle;
a second timer used to indicate that the network side device has new data to be scheduled;
a third timer used to indicate the terminal to perform a hybrid automatic repeat request (HARQ) feedback; or
a fourth timer used to indicate the terminal to receive data re-transmitted by the network side device.

Alternatively, starting the reception monitoring of the MBS includes at least one of:
starting at least one of the first timer, the second timer, the third timer or the fourth timer;
starting monitoring of a control channel corresponding to the MBS; or
starting monitoring of a data channel corresponding to the MBS.

Alternatively, stopping the reception monitoring of the MBS includes at least one of:
stopping or not starting at least one of the first timer, the second timer, the third timer or the fourth timer;
stopping monitoring of a control channel corresponding to the MBS; or
stopping monitoring of a data channel corresponding to the MBS.

According to a third aspect of embodiments of the disclosure, an apparatus for switching control of a monitoring state is provided. The apparatus is performed by a network side device, and includes:
a configuring module, configured to configure reception configuration information corresponding to a multicast broadcast service (MBS) for a terminal, in which the reception configuration information is used for the terminal to receive the MBS in a discontinuous reception mode; and
a sending module, configured to send target control information to the terminal, in which the target control information is used to activate or deactivate reception monitoring of the MBS of the terminal.

According to a fourth aspect of embodiments of the disclosure, an apparatus for switching control of a monitoring state is provided. The apparatus is performed by a terminal, and includes:
a monitoring state switching module, configured to start or stop reception monitoring of a multicast broadcast service (MBS) based on an indication of received target control information and reception configuration information corresponding to the MBS configured by a network side device for the terminal, in which the target control information is used to activate or deactivate the reception monitoring of the MBS of the terminal, and the reception configuration information is used for the terminal to receive the MBS in a discontinuous reception mode.

According to a fifth aspect of embodiments of the disclosure, a computer readable storage medium having computer programs stored thereon is provided. The computer programs are configured to perform the method for switching control of a monitoring state according to any of the first aspect.

According to a sixth aspect of embodiments of the disclosure, a computer readable storage medium having computer programs stored thereon is provided. The computer programs are configured to perform the method for switching control of a monitoring state according to any of the second aspect.

According to a seventh aspect of embodiments of the disclosure, a device for switching control of a monitoring state is provided. The device includes:
a processor;
a memory for storing instructions executable by the processor.

The processor is configured to perform the method for switching control of a monitoring state according to any of the first aspect.

According to an eighth aspect of embodiments of the disclosure, a device for switching control of a monitoring state is provided. The device includes:
a processor;
a memory for storing instructions executable by the processor.

The processor is configured to perform the method for switching control of a monitoring state according to any of the second aspect.

The technical solution provided by the embodiments of the disclosure may include following beneficial effects:
In the embodiments of the disclosure, the network side device can configure the reception configuration information corresponding to the MBS for the terminal, so that the terminal can receive the MBS on time using a discontinuous reception mode. In addition, the network side device can activate or deactivate the reception monitoring of the MBS of the terminal through the target control information, and the terminal can start or stop the reception monitoring of the MBS according to the indication of the target control information and the reception configuration information, to better save energy consumption of the terminal.

It is understandable that the above general description and the following detailed descriptions are exemplary and explanatory only and are not used to limit the disclosure.

### BRIEF DESCRIPTION OF THE DRAWINGS

The accompanying drawings, which are incorporated in and constitute a part of the description, illustrate embodiments consistent with the disclosure and together with the description serve to explain the principles of the disclosure.
FIG. 1 is a schematic diagram of a scene of receiving a Multicast Broadcast Service (MBS) in a discontinuous reception mode according to an embodiment of the disclosure.
FIG. 2 is a flowchart of a method for switching control of a monitoring state according to an embodiment of the disclosure.
FIG. 3 is a flowchart of a method for switching control of a monitoring state according to an embodiment of the disclosure.
FIG. 4 is a flowchart of a method for switching control of a monitoring state according to an embodiment of the disclosure.
FIG. 5 is a flowchart of a method for switching control of a monitoring state according to an embodiment of the disclosure.
FIG. 6A is a schematic diagram of a scene of determining a target time domain position according to an embodiment of the disclosure.
FIG. 6B is a schematic diagram of a scene of determining a target time domain position according to an embodiment of the disclosure.
FIG. 7 is a flowchart of a method for switching control of a monitoring state according to an embodiment of the disclosure.
FIG. 8 is a flowchart of a method for switching control of a monitoring state according to an embodiment of the disclosure.
FIG. 9 is a block diagram of an apparatus for switching control of a monitoring state according to an embodiment of the disclosure.
FIG. 10 is a block diagram of an apparatus for switching control of a monitoring state according to an embodiment of the disclosure.
FIG. 11 is a block diagram of a device for switching control of a monitoring state according to an embodiment of the disclosure.
FIG. 12 is a block diagram of a device for switching control of a monitoring state according to an embodiment of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of the exemplary embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the disclosure. The singular forms of "a" and "the" used in the disclosure and the appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

The following describes the method for switching control of a monitoring state provided in the disclosure from the network side device side.

Embodiments of the disclosure provide a method for switching control of a monitoring state, as illustrated in FIG. 2, FIG. 2 is flowchart illustrating a method for switching control of a monitoring state according to an embodiment. The method may be performed by a network side device. The method may include following steps.

At step 201, reception configuration information corresponding to a multicast broadcast service (MBS) is configured for a terminal, the reception configuration information is used for the terminal to receive the MBS in a discontinuous reception mode.

At step 202, target control information is sent to the terminal, the target control information is used to activate or deactivate reception monitoring of the MBS of the terminal.

In the above embodiments, a monitoring switching module is configured to start or stop the reception monitoring of the MBS based on an indication of the target control information and the reception configuration information corresponding to the MBS configured for the terminal by the network side device.

In some optional embodiments, the reception configuration information corresponding to the MBS configured for the terminal by the network side device may include but is not limited to at least one of: a service monitoring cycle of the MBS; a first timer used to indicate a service monitoring duration in each service monitoring cycle; a service-monitoring start position in each service monitoring cycle; a second timer used to indicate that the network side device has new data to be scheduled; a third timer used to indicate the terminal to perform a hybrid automatic repeat request (HARQ) feedback; or a fourth timer used to indicate the terminal to receive data re-transmitted by the network side device.

The service monitoring cycle (e.g., denoted as mbsCycle) of the MBS is used to indicate the terminal to monitor the MBS periodically according to the service monitoring cycle. The first timer (e.g., denoted as mbsOnDurationTimer) may be used to indicate the service monitoring duration during which the terminal is expected to perform service monitoring within each service monitoring cycle. The service-monitoring start position (e.g., denoted as mbsStartOffset) may be used to indicate a start time domain position where the terminal starts to monitor the MBS within each service monitoring cycle.

The second timer may be an inactive timer (e.g., denoted as mbsInactivityTimer). When the network side device has new data to be scheduled, the terminal can be controlled to start or restart the second timer. The third timer may be a HARQ feedback timer (e.g., denoted as mbsHARQ-RTT-Timer). The terminal may start the third timer when downlink data is received and there is HARQ information to be fed back for the downlink data. The fourth timer may be a HARQ retransmission timer (e.g., denoted as mbsHARQ-RxTimer). After the third timer expires, the terminal starts the fourth timer. During activation of the fourth timer, the network side device may send retransmitted data to the terminal.

The above is only an exemplary explanation. In actual applications, the network side devices may configure corresponding reception configuration information for the terminals based on the requirement of the MBS. Other reception configuration information shall fall within the protection scope of the disclosure.

In a possible implementation, when the target control information is used to activate the reception monitoring of the MBS of the terminal, the target control information includes any one of: a wake-up signal (WUS), target downlink control information (DCI), or a target media access control layer control element (MAC CE).

In another possible implementation, when the target control information is used to deactivate the reception monitoring of the MBS of the terminal, the target control information includes any one of:
a go-to-sleep signal (GTS), the target DCI, the target MAC CE.

Optionally, the target DCI may be DCI identified by a power saving radio network temporary identification (PS-RNTI). The target DCI may be DCI with Cyclic Redundancy Check (CRC) scrambled by the PS-RNTI.

Optionally, the target MAC CE may be an MAC CE set specifically for activating or deactivating the reception monitoring of the MBS of the terminal.

Optionally, the content of the target control information used to activate or deactivate reception monitoring of the MBS of the terminal may include but is not limited to at least one of:
indication information of the MBS, or activation state information of the MBS.

The indication information of the MBS includes but is not limited to at least one of: an MBS identifier (such as the MBS identifier involved in the Background), or an MBS scheduling identifier.

Further, the MBS scheduling identifier may include but is not limited to at least one of: a dynamic scheduling identifier, such as a Group Radio Network Temporary Identifier (G-RNTI); or a semi-persistent scheduling identifier, such as a SPS (Semi-Persistent Scheduling)-RNTI.

The activation state information of the MBS may include but is not limited to at least one of: an activated state (or a state of "the reception monitoring of the MBS being started"), or a deactivate state (or a state of "the reception monitoring of the MBS being stopped").

The above is only an exemplary explanation. The other information content of the target control information used to activate or deactivate the reception monitoring of the MBS of the terminal should fall within the protection scope of the disclosure.

In the above embodiments, the network side device can activate or deactivate the reception monitoring of the MBS at the terminal side through any type of the above target control information, which is easy to implement and has high availability.

In some optional embodiments, with reference to FIG. 3, FIG. 3 is a flowchart of a method for switching control of a monitoring state according to an embodiment. The method may be performed by a network side device. The method may include the following steps.

At step 301, reception configuration information corresponding to MBS is configured for a terminal through a radio resource control (RRC) message. The reception configuration information is used for the terminal to receive the MBS in a discontinuous reception mode.

At step 302, target control information is sent to the terminal, the target control information is used to activate or deactivate reception monitoring of the MBS of the terminal.

In the above embodiments, the network side device may configure the reception configuration information corresponding to the MBS for the terminal through the RRC message, so that the terminal can receive the MBS in the discontinuous reception mode. In addition, the network side device can activate the reception monitoring of the MBS of the terminal through the target control information in the presence of a MBS, or deactivate the reception monitoring of the MBS of the terminal through the target control information in a case where sending the MBS is stopped, thereby saving energy consumption of the terminal.

In some optional embodiments, the RRC message sent by the network side device to the terminal may include not only the reception configuration information corresponding to the MBS configured by the network side device for the terminal, but also include an initial monitoring state corresponding to the MBS configured by the network side device for the terminal. The initial monitoring state includes stopping the reception monitoring of the MBS or starting the reception monitoring of the MBS.

After the terminal side receives the reception configuration information, if the initial monitoring state configured in the RRC message is stopping the reception monitoring of the MBS, the terminal may not start the reception monitoring of the MBS until the network side activates the reception monitoring of the MBS through the target control information. Based on the reception configuration information, the terminal performs the reception monitoring of the MBS.

After the terminal side receives the reception configuration information, if the initial monitoring state configured in the RRC message is starting the reception monitoring of the MBS, the terminal side may immediately start the reception monitoring of the MBS. Subsequently, based on the target control information sent by the network side device and used to deactivate the reception monitoring of the MBS, the reception monitoring of the MBS can be stopped.

In the above embodiments, the network side device may configure the initial monitoring state of the MBS for the terminal, which is simple to implement, and further saves energy consumption of the terminal.

In some optional embodiments, a number of MBSs may be one or more. When the number of MBSs is more than one, the network side device may configure different reception configuration information for different MBSs.

For example, for MBS # 1, the network side device may configure reception configuration information # 1 for the terminal, such as mbsDRX-config-1. For MBS # 2, the network side device may configure reception configuration information # 2 for the terminal, such as mbsDRX-config-2......, where, mbsDRX-config-1 and mbsDRX-config-2 can be different.

In the above embodiments, when the network side device configures the reception configuration information corresponding to the MBS for the terminal, different MBSs can be configured with different reception configuration information, resulting in high availability.

In the following, a solution for switching control of a monitoring state will be introduce from the terminal side.

Embodiments of the disclosure provide a method for switching control of a monitoring state, as shown in FIG. 4, FIG. 4 is a flowchart of a method for switching control of a monitoring state according to an embodiment. The method may be performed by a terminal. The method can include the following steps.

At step 401, based on an indication of received target control information and reception configuration information corresponding to an MBS configured by a network side device for the terminal, reception monitoring of the MBS is started or stopped.

The target control information is used to activate or deactivate the reception monitoring of the MBS of the terminal, and the reception configuration information is used for the terminal to receive the MBS in a discontinuous reception mode.

In a possible implementation, in response to determining that the target control information is used to activate the reception monitoring of the MBS of the terminal, the reception monitoring of the MBS is started based on the indication of the target control information and the reception configuration information.

In another possible implementation, in response to the target control information being used to deactivate the reception monitoring of the MBS of the terminal, the reception monitoring of the MBS is stopped based on the indication of the target control information and the reception configuration information.

In the above embodiment, the terminal can start or stop the reception monitoring of the MBS based on the indication of target control information and the reception configuration information, without the need to always maintain the reception monitoring of the MBS according to the configuration of the network side device, thus better saving the energy consumption of the terminal.

In some optional embodiments, the terminal, based on the initial monitoring state, can be in a state of the reception monitoring of the MBS being stopped, or the terminal can switch to the state of the reception monitoring of the MBS being stopped according to the previously received target control information for deactivating the reception monitoring of the MBS of the terminal.

When the terminal determines that the terminal is in the state of the reception monitoring of the MBS being stopped, it can monitor the target control information used to activate the reception monitoring of the MBS of the terminal only.

That is to say, when the terminal stops the reception monitoring of the MBS, there is no need to monitor the target control information used to deactivate the reception monitoring of the MBS of the terminal.

In some optional embodiments, the terminal, based on the initial monitoring state, can be in a state of the reception monitoring of the MBS being started, or the terminal can switch to the state of the reception monitoring of the MBS being started according to previously received target control information for activating the reception monitoring of the MBS of the terminal.

When the terminal determines that it is in the state of the reception monitoring of the MBS being started, it can monitor the target control information used to deactivate the reception monitoring of the MBS of the terminal only.

That is to say, when the terminal starts the reception monitoring of the MBS, there is no need to monitor the target control information used to activate the reception monitoring of the MBS of the terminal.

In the above embodiments, the terminal can monitor only required target control information based on the currently monitoring state, which is easy to implement, with high availability, and further saves the energy consumption of the terminal.

In some optional embodiments, the terminal may determine the initial monitoring state of the MBS using any of the following methods.

In the first method, the initial monitoring state may be determined according to an indication of the network side device.

In an embodiment of the disclosure, the network side device can configure the reception configuration information corresponding to the MBS for the terminal through an RRC message, and the RRC message may also include the initial monitoring state configured by the network side device for the terminal. The terminal determines the reception configuration information corresponding to the MBS and the initial monitoring state based on the RRC message.

In the second method, the initial monitoring state is agreed in a protocol.

In an embodiment of the disclosure, initial monitoring states of different MBSs can be predetermined through protocol agreements. The terminal only needs to receive the reception configuration information corresponding to the MBS sent by the network side device.

For example, the network side device configures the reception configuration information mbsDRX-config-1 for the MBS # 1 through an RRC message, and the terminal directly determines an initial monitoring state corresponding to the MBS # 1 according to a protocol agreement.

In an embodiment of the disclosure, the initial monitoring state includes stopping the reception monitoring of the MBS or starting the reception monitoring of the MBS.

In the above embodiments, the terminal can determine the initial monitoring state corresponding to the MBS according to the indication of the network side devices or directly according to the protocol agreement, which is easy to implement and has high availability.

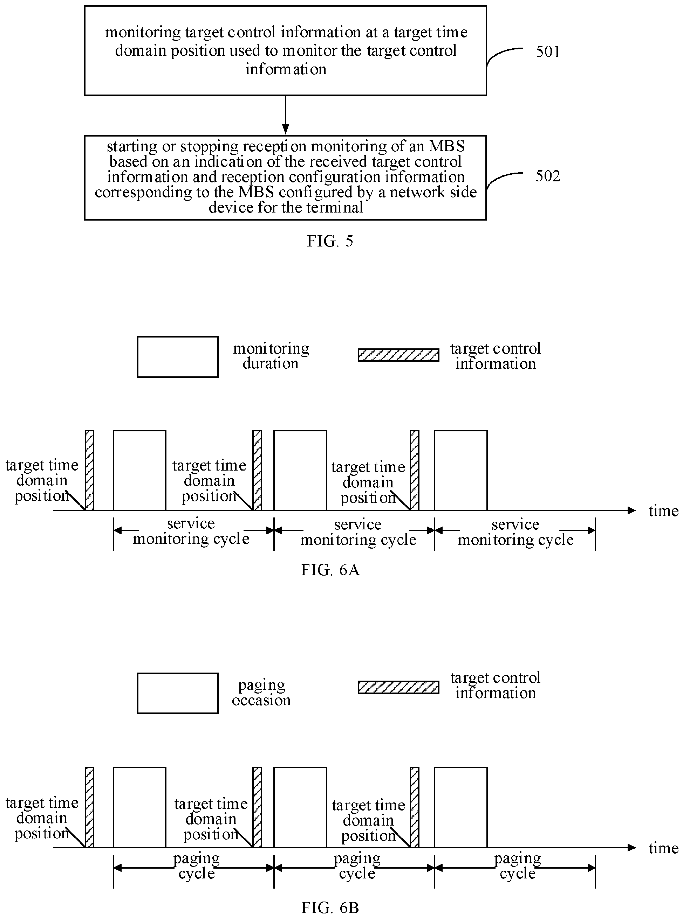

In some optional embodiments, with reference to FIG. 5, FIG. 5 is a flowchart of a method for controlling a monitoring state according to an embodiment. The method can be performed by a terminal. The method can include the following steps.

At step 501, target control information is monitored at a target time domain position used to monitor the target control information.

The target control information is used to activate or deactivate the reception monitoring of the MBS of the terminal.

At step 502, based on an indication of the received target control information and the reception configuration information corresponding to the MBS configured by the network side device for the terminal, the reception monitoring of the MBS is started or stopped.

The reception configuration information is used for the terminal to receive the MBS in a discontinuous reception mode.

In the above embodiments, the terminal side can monitor the target control information at the target time domain position used for monitoring the target control information, so as to start or stop the reception monitoring of the MBS, with high availability.

In a possible implementation, in a case where the target control information is monitored at the target time domain position by the terminal and a bit value of the target control information is a first preset value, the terminal determines that the target control information used to indicate to activate the reception monitoring of the MBS of the terminal is monitored. The first preset value may be 1.

For example, the terminal receives the target control information at the target time domain position SFN (System Frame Number) # 1, slot # 0 based on a target cycle, such as 10 milliseconds, and the target control information is 1 bit with a bit value of 1, then the terminal determines that the target control information used to indicate to activate the reception monitoring of the MBS of the terminal is monitored.

Or, in a case where when the target control information is monitored at the target time domain position and a bit value of the target control information is a second preset value, the terminal determines that the target control information used to indicate to deactivate the reception monitoring of the MBS of the terminal is monitored. The second preset value may be 0.

For example, the terminal receives the target control information at the target time domain position SFN (System Frame Number) # 1, slot # 0 based on a target cycle, such as 10 milliseconds, and the target control information is 1 bit with a bit value of 0, then the terminal determines that the target control information used to indicate to deactivate the reception monitoring of the MBS of the terminal is monitored.

In another possible implementation, the target control information is not monitored at the target time domain position by the terminal, and it is determined that the terminal is in a state of the reception monitoring of the MBS being stopped. In order to avoid missing the MBS, the terminal may start the reception monitoring of the MBS based on the reception configuration information.

Or, the target control information is not monitored at the target time domain position by the terminal, and it is determined that the terminal is in a state of the reception monitoring of the MBS being started. In order to avoid wasting the energy consumption of the terminal, the terminal can stop the reception monitoring of the MBS based on the reception configuration information.

In the above embodiments, if the target control information is monitored at the target time domain position by the terminal, it can be determined, based on the bit value of the target control information, that the target control information is used to activate or deactivate the reception monitoring of the MBS. If the target control information is not monitored at the target time domain position by the terminal, the terminal can switch the monitoring state based on the current monitoring state, to avoid missing the MBS or causing waste of the energy consumption of the terminal, with high availability.

In some optional embodiments, an offset value of the target time domain position relative to a specified time domain position within each target cycle is a predetermined offset value. A cycle duration of the target cycle may be a positive integer multiple of a service monitoring cycle of the MBS or a positive integer multiple of a cycle duration of a paging cycle. The specified time domain position includes, but is not limited to, at least one of the following: a service-monitoring start position of the MBS, a paging-monitoring start position, or a change-starting indication position of a multicast control channel.

The change-starting indication position of a multicast control channel includes but is not limited to a start indication position of indication information used to indicate that the MBS of a MCCH channel is started, or a start indication position of indication information of a change of a MCCH configuration message.

For example, the specified time domain position is the service-monitoring start position of the MBS. As shown in FIG. 6A, a cycle duration of a service monitoring cycle of the MBS # 1 is 10 slots (time slots) and the predetermined offset value is -2 slots, the cycle duration of the target cycle is equal to the cycle duration of the service monitoring cycle of the MBS. In a case where the cycle duration of the service monitoring cycle is 10 milliseconds, and a slot corresponding to the service-monitoring start position is slot # 2, the terminal may determine a slot # 0 position in each service monitoring cycle of the MBS as the target time domain position, and monitor the target control information at the target time domain position.

For example, the specified time domain position is the paging-monitoring start position. As shown in FIG. 6B, the cycle duration of the paging cycle is 100 milliseconds, and start positions for paging is time domain positions of SFN # 1 and slot # 2. The cycle duration of the target cycle is equal to the cycle duration of the paging cycle, both of which are 100 milliseconds, and the predetermined offset value is -2 slots. The terminal determines 100 milliseconds a cycle, determines the positions of SFN # 1 and slot # 0 as the target time domain positions, and monitors the target control information at the time domain position.

When the specified the time domain position is the change-starting indication position of a multicast control channel, the method of determining the target time domain position is similar to the above methods and will not be repeated here.

In the above embodiments, the terminal can determine the target time domain position for monitoring the target control information within each target cycle with reference to the specified time domain position, so as to better save the energy consumption of the terminal, with high availability.

In some optional embodiments, a number of MBSs is one or more, and when the number of the MBSs is more than one, different MBSs correspond to different reception configuration information.

In some optional embodiments, the reception configuration information corresponding to the MBS includes at least one of the following: a service monitoring cycle of the MBS; a first timer for indicating a service monitoring duration within each service monitoring cycle; a service-monitoring start position in each service monitoring cycle; a second timer for indicating that the network side device has new data to be scheduled; a third timer for indicating the terminal to perform a HARQ feedback; or a fourth timer for instructing the terminal to receive data re-transmitted by the network side device.

In some optional embodiments, when the terminal determines that the initial monitoring state is starting the reception monitoring of the MBS, or when the terminal receives the target control information for activating the reception monitoring of the MBS, the terminal can start the reception monitoring of the MBS. Correspondingly, the terminal can perform at least one of the following:
starting at least one of the first timer, the second timer, the third timer, or the fourth timer;
starting monitoring of a control channel corresponding to the MBS; or
starting monitoring of a data channel corresponding to the MBS.

Starting the monitoring of the corresponding control channel includes but is not limited to starting monitoring of a PDCCH corresponding to the MBS. For example, a scheduling identifier corresponding to MBS # 1 is G-RNTI-1, and a corresponding control channel is G-RNTI-1 PDCCH. The terminal can start to monitor the G-RNTI-1 PDCCH.

Starting the monitoring of the data channel corresponding to the MBS includes but is not limited to starting monitoring of a PDSCH (Physical Downlink Shared Channel) corresponding to the MBS. For example, MBS # 1 corresponds to performing data transmission through SPS PDSCH-1, and the terminal can start to monitor the SPS PDSCH-1.

In some optional embodiments, when the terminal determines that the initial monitoring state is stopping the reception monitoring of the MBS, or when the terminal receives the target control information for deactivating the reception monitoring of the MBS, the terminal can stop the reception monitoring of the MBS. Correspondingly, the terminal can perform at least one of the following:
stopping or not starting at least one of the first timer, the second timer, the third timer, and the fourth timer;
stopping monitoring of the control channel corresponding to the MBS;
stopping monitoring of the data channel corresponding to the MBS.

The terminal can stop or not start at least one of the above timers based on the reception configuration information corresponding to the MBS. In addition, the terminal can stop the monitoring of the control channel corresponding to the MBS, such as stopping monitoring the G-RNTI-1 PDCCH. The terminal can stop the monitoring of the data channel corresponding to the MBS, such as stopping monitoring the SPS PDSCH-1.

In the above embodiments, the terminal can start or stop the reception monitoring of the MBS, thereby avoiding missing the MBS or causing waste of the energy consumption of the terminal, with high availability.

In some optional embodiments, the content of the target control information received by the terminal side for activating or deactivating the reception monitoring of the MBS of the terminal, includes but is not limited to at least one of the following:
indication information of the MBS, or activation state information of the MBS.

The indication information of the MBS can include but is not limited to at least one of the following: an MBS identifier (such as the MBS identifier involved in Background), or an MBS scheduling identifier.

Further, the MBS scheduling identifier can include but is not limited to at least one of the following: a dynamic scheduling identifier, such as a G-RNTI, or a semi-persistent scheduling identifier, such as a SPS-RNTI.

The activation state information of the MBS can include but is not limited to at least one of the following: an activated state (or a state of "the reception monitoring of the MBS being started"), or a deactivated the state (or a state of "the reception monitoring of the MBS being stopped").

The above is only an exemplary explanation. The other information content of the target control information for activating or deactivating the reception monitoring of the MBS of the terminal should fall within the scope of protection of the disclosure.

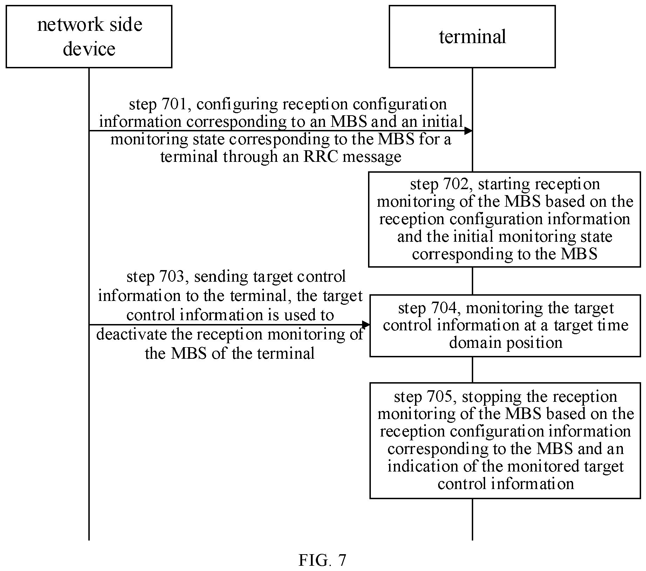

In some optional embodiments, as illustrated in FIG. 7, FIG. 7 is a flowchart of a method for controlling a monitoring state according to an embodiment, the method may include the following steps.

At step 701, a network side device configures reception configuration information corresponding to an MBS and an initial monitoring state corresponding to the MBS for a terminal through an RRC message.

At step 702, the terminal starts reception monitoring of the MBS based on the reception configuration information and the initial monitoring state corresponding to the MBS.

In an embodiment of the disclosure, for example, the initial monitoring state is starting the reception monitoring of the MBS. In practical applications, the initial monitoring state can also be stopping the reception monitoring of the MBS.

At step 703, the network side device sends target control information to the terminal, the target control information is used to deactivate the reception monitoring of the MBS of the terminal.

In the embodiment of the disclosure, if the initial monitoring state is stopping the reception monitoring of the MBS, the target control information can be used to activate the reception monitoring of the MBS of the terminal (not shown in FIG. 7).

At step 704, the terminal monitors the target control information at a target time domain position.

At step 705, the terminal stops the reception monitoring of the MBS based on the reception configuration information corresponding to the MBS and an indication of the monitored target control information.

In the above embodiments, the network side device can control the terminal to stop the reception monitoring of the MBS through the target control information when there is no MBS is to be sent, saving energy consumption of the terminal.

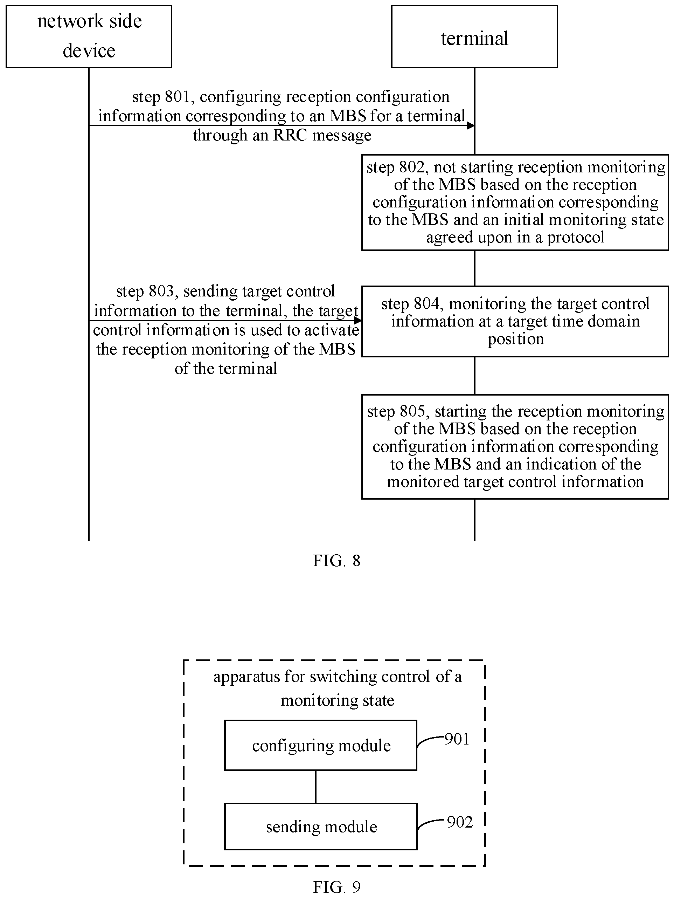

In some optional embodiments, as illustrated in FIG. 8, FIG. 8 a flowchart of a method for controlling a monitoring state according to an embodiment, the method may include the following steps.

At step 801, a network side device configures reception configuration information corresponding to an MBS for a terminal through an RRC message.

At step 802, the terminal does not start reception monitoring of the MBS based on the reception configuration information corresponding to the MBS and an initial monitoring state corresponding to the MBS agreed upon in a protocol.

In the embodiment of the disclosure, for example, the initial monitoring state agreed upon in the protocol is stopping the reception monitoring of the MBS. In practical applications, the initial monitoring state agreed upon in the protocol can also be starting the reception monitoring of the MBS.

At step 803, the network side device sends target control information to the terminal, the target control information is used to activate the reception monitoring of the MBS of the terminal.

In the embodiment of the disclosure, if the initial monitoring state is starting the reception monitoring of the MBS, the target control information can be used to deactivate the reception monitoring of the MBS of the terminal (not shown in FIG. 8).

At step 804, the terminal monitors the target control information at a target time domain position.

At step 805, the terminal initiates the reception monitoring of the MBS based on the reception configuration information corresponding to the MBS and an indication of the monitored target control information.

In the above embodiments, the network side device can control the terminal to start the reception monitoring of the MBS through the target control information, avoiding the terminal from missing the MBS and saving energy consumption of the terminal. Correspondingly to the aforementioned embodiments of an application function implementation method, the disclosure also provides embodiments of an application function implementation apparatus.

With reference to FIG. 9, FIG. 9 is a block diagram of an apparatus for switching control of a monitoring state according to an embodiment. The apparatus is performed by a network side device, and includes:
a configuring module 901, configured to configure reception configuration information corresponding to a multicast broadcast service (MBS) for a terminal, in which the reception configuration information is used for the terminal to receive the MBS in a discontinuous reception mode; and
a sending module 902, configured to send target control information to the terminal, in which the target control information is used to activate or deactivate reception monitoring of the MBS of the terminal.

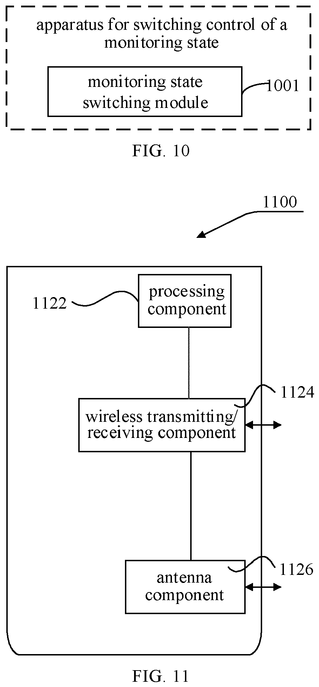

With reference to FIG. 10, FIG. 10 is a block diagram of a method for switching control of a monitoring state according to an embodiment. The apparatus is performed by a terminal, and includes:
a monitoring state switching module 1001, configured to start or stop reception monitoring of a multicast broadcast service (MBS) based on an indication of received target control information and reception configuration information corresponding to the MBS configured by a network side device for the terminal, in which the target control information is used to activate or deactivate the reception monitoring of the MBS of the terminal, and the reception configuration information is used for the terminal to receive the MBS in a discontinuous reception mode.

For the apparatus embodiments, since they basically correspond to the method embodiments, the relevant contents can be referred to part of the description of method embodiments. The apparatus embodiments described above are only exemplary, where the units described above as separate components may or may not be physically separate, and the components shown as units may or may not be physical units, that is, may be located in one place or may be distributed to multiple network units. Some or all modules can be selected according to actual needs to realize the purpose of the solution of the disclosure. It can be understood and implemented by those skilled in the art without creative effort.

Correspondingly, the disclosure further provides a computer readable storage medium having computer programs stored thereon. The computer programs are configured to perform any of the method for switching control of a monitoring state performed by the network side device.

Correspondingly, the disclosure further provides a computer readable storage medium having computer programs stored thereon. The computer programs are configured to perform any of the method for switching control of a monitoring state performed by the terminal side.

Correspondingly, the disclosure further provides a device for switching control of a monitoring state, includes:
a processor; and
a memory for storing instructions executable by the processor.

The processor is configured to perform any of the method for switching control of a monitoring state performed by the network side device.

As illustrated in FIG. 11, FIG. 11 is a block diagram of a device 1100 for switching control of a monitoring state according to an embodiment of the disclosure. The device 1100 may be provided as a network side device. As illustrated in FIG. 11, the device 1100 includes a processing component 1122, a wireless transmitting/receiving component 1124, an antenna component 1126 and a signal processing part specific to a wireless interface. The processing component 1122 may further include one or more processors.

One of the processors of the processing component 1122 may be configured to perform any of the method for switching control of a monitoring state described above.

Correspondingly, the disclosure further provides a device for switching control of a monitoring state , includes:
a processor; and
a memory for storing instructions executable by the processor.

The processor is configured to perform any of the method for switching control of a monitoring state performed by the terminal side.

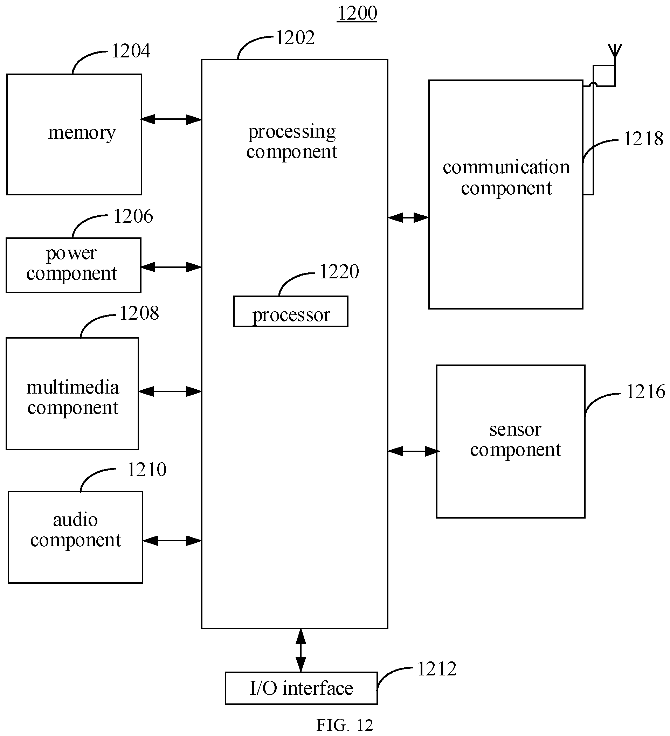

FIG. 12 is a block diagram of an electronic device 1200 according to an embodiment. For example, the electronic device 1200 may be terminals such as a mobile phone, a tablet computer, an e-book reader, a multimedia playback device, a wearable device, a vehicle-mounted terminal, an ipad, a smart TV, etc.

As illustrated in FIG. 12, the electronic device 1200 may include one or more of the following components: a processing component 1202, a memory 1204, a power component 1206, a multimedia component 1208, an audio component 1210, an input/output (I/O) interface 1212, a sensor component 1216, and a communication component 1218.

The processing component 1202 typically controls overall operations of the electronic device 1200, such as the operations associated with display, telephone calls, data paging, camera operations, and recording operations. The processing component 1202 may include one or more processors 1220 to execute instruction to perform all or part of the steps in the above described method for switching control of a monitoring state. Moreover, the processing component 1202 may include one or more modules which facilitate the interaction between the processing component 1202 and other components. For example, the processing component 1202 may include a multimedia module to facilitate the interaction between the multimedia component 1208 and the processing component 1202. For another example, the processing component 1202 may read executable instructions form the memory to implement the steps of the method for switching control of a monitoring state provided in the above embodiments.

The memory 1204 is configured to store various types of data to support the operation of the electronic device 1200. Examples of such data include instructions for any applications or methods operated on the electronic device 1200, contact data, phonebook data, messages, pictures, videos, etc. The memory 1204 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or an optical disk.

The power component 1206 provides power to various components of the electronic device 1200. The power component 1206 may include a power management system, one or more power sources, and any other components associated with the generation, management, and distribution of power in the electronic device 1200.

The multimedia component 1208 includes a screen providing an output interface between the electronic device 1200 and the user. In some embodiments, the multimedia component 1208 includes a front-facing camera and/or a rear-facing camera. When the electronic device 1200 is in an operating mode, such as a shooting mode or a video mode, the front-facing camera and/or the rear-facing camera can receive external multimedia data. Each of the front-facing camera and the rear-facing camera may be a fixed optical lens system or has focal length and optical zoom capability.

The audio component 1210 is configured to output and/or input audio signals. For example, the audio component 1210 includes a microphone (MIC) configured to receive an external audio signal when the electronic device 1200 is in an operation mode, such as a call mode, a recording mode, and a voice recognition mode. The received audio signal may be further stored in the memory 1204 or transmitted via the communication component 1218. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1216 includes one or more sensors to provide status assessments of various aspects of the electronic device 1200. For instance, the sensor component 1216 may detect an open/closed status of the electronic device 1200, relative positioning of components, e.g., the display and the keypad, of the electronic device 1200, a change in position of the electronic device 1200 or a component of the electronic device 1200, a presence or absence of a user contact with the electronic device 1200, an orientation or an acceleration/deceleration of the electronic device 1200, and a change in temperature of the electronic device 1200. The sensor component 1216 may include a proximity sensor configured to detect the presence of nearby objects without any physical contact. The sensor component 1216 may also include a light sensor, such as a Complementary Metal Oxide Semiconductor (CMOS) or Charge-Coupled Device (CCD) image sensor, for using in imaging applications. In some embodiments, the sensor component 1216 may also include an accelerometer sensor, a gyroscope sensor, a magnetic sensor, a pressure sensor, or a temperature sensor.

The communication component 1218 is configured to facilitate communication, wired or wirelessly, between the electronic device 1200 and other devices. The electronic device 1200 can access a wireless network based on a communication standard, such as Wi-Fi, 2G, 3G, 4G, 5G, or 6G, or a combination thereof. In an embodiment, the communication component 1218 receives a broadcast signal from an external broadcast management system or broadcast associated information via a broadcast channel. In an embodiment, the communication component 1218 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the embodiments, the electronic device 1200 may be implemented by at least one of an Application Specific Integrated Circuit (ASIC), a Digital Signal Processor (DSP), a Digital Signal Processing Device (DSPD), a Programmable Logic Device (PLD), a Field Programmable Gate Array (FPGA), a controller, a micro-controller, a microprocessor or other electronic components, for performing the above described methods for switching control of a monitoring state.

In the embodiments, there is also provided a non-transitory computer readable storage medium including instructions, such as the memory 1204. The instructions may be executed by the processor 1220 in the device 1200 for performing the above method for switching control of a monitoring state. For example, the non-transitory computer-readable storage medium may be a ROM, a Random Access Memory (RAM), a CD-ROM, a magnetic tape, a floppy disc, and an optical data storage device.

Other embodiments of the disclosure will be apparent to those skilled in the art from consideration of the specification and practice of the disclosure disclosed here. This disclosure is intended to cover any variations, usages, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for switching control of a monitoring state, performed by a network device, comprising:
configuring reception configuration information corresponding to a multicast broadcast service (MBS) for a terminal, wherein the reception configuration information is used for the terminal to receive the MBS in a discontinuous reception mode; and
sending target control information to the terminal, wherein the target control information is used to activate or deactivate reception monitoring of the MBS of the terminal.

2. The method according to claim 1, wherein the target control information is used to activate the reception monitoring of the MBS of the terminal, the target control information comprises any one of:
a wake-up signal, target downlink control information (DCI), or a target media access control layer control element (MAC CE);
wherein the target control information is used to deactivate the reception monitoring of the MBS of the terminal, the target control information comprises any one of:
a go-to-sleep signal, the target DCI, or the target MAC CE.

3. The method according to claim 2, wherein the target DCI is DCI identified by a power saving radio network temporary identification (PS-RNTI).

4. The method according to claim 1, wherein the target control information comprises at least one of: indication information of the MBS, or activation state information of the MBS;
wherein, the indication information of the MBS comprises at least one of: an MBS identifier, or an MBS scheduling identifier; wherein the MBS scheduling identifier comprises at least one of: a dynamic scheduling identifier, or a semi-persistent scheduling identifier;
the activation state information of the MBS comprises at least one of: an activated state, or a deactivated state.

5. The method according to claim 1, wherein configuring the reception configuration information corresponding to the MBS for the terminal comprises:
configuring the reception configuration information corresponding to the MBS for the terminal through a radio resource control (RRC) message.

6. The method according to claim 5, wherein the RRC message comprises an initial monitoring state corresponding to the MBS configured for the terminal, the initial monitoring state comprises stopping the reception monitoring of the MBS or starting the reception monitoring of the MBS.

7. The method according to claim 1, wherein a number of MBSs is one or more, and in response to the number of the MBSs is more than one, reception configuration information corresponding to different MBSs are different.

8. The method according to any of claims 1 to 7, wherein the reception configuration information corresponding to the MBS comprises at least one of:
a service monitoring cycle of the MBS;
a first timer used to indicate a service monitoring duration in each service monitoring cycle;
a service-monitoring start position in each service monitoring cycle;
a second timer used to indicate that the network device has new data to be scheduled;
a third timer used to indicate the terminal to perform a hybrid automatic repeat request (HARQ) feedback; or
a fourth timer used to indicate the terminal to receive data re-transmitted by the network device.

9. A method for switching control of a monitoring state, performed by a terminal, comprising:
starting or stopping reception monitoring of a multicast broadcast service (MBS) based on an indication of received target control information and reception configuration information corresponding to the MBS configured by a network device for the terminal, wherein the target control information is used to activate or deactivate the reception monitoring of the MBS of the terminal, and the reception configuration information is used for the terminal to receive the MBS in a discontinuous reception mode.

10. The method according to claim 9, wherein the target control information comprises at least one of: indication information of the MBS, or activation state information of the MBS;
wherein, the indication information of the MBS comprises at least one of: an MBS identifier, or an MBS scheduling identifier; wherein the MBS scheduling identifier comprises at least one of: a dynamic scheduling identifier, or a semi-persistent scheduling identifier;
the activation state information of the MBS comprises at least one of: an activated state, or a deactivated state.

11. The method according to claim 9, wherein starting or stopping the reception monitoring of the MBS based on the indication of the received target control information and the reception configuration information corresponding to the MBS configured for the terminal by the network device comprises:
in response to determining that the target control information is used to activate the reception monitoring of the MBS of the terminal, starting the reception monitoring of the MBS based on the indication of the target control information and the reception configuration information; or
in response to determining that the target control information is used to deactivate the reception monitoring of the MBS of the terminal, stopping the reception monitoring of the MBS based on the indication of the target control information and the reception configuration information.

12. The method according to claim 9, further comprising any one of:
in response to determining that the terminal is in a state of the reception monitoring of the MBS being stopped, monitoring the target control information used to activate the reception monitoring of the MBS of the terminal; or
in response to determining that the terminal is in a state of the reception monitoring of the MBS being started, monitoring the target control information used to deactivate the reception monitoring of the MBS of the terminal.

13. The method according to claim 9, further comprising any one of:
determining an initial monitoring state corresponding to the MBS based on an indication of a radio resource control (RRC) message sent by the network device; or
determining an initial monitoring state corresponding to the MBS based on a protocol agreement;
wherein the initial monitoring state comprises stopping the reception monitoring of the MBS, or starting the reception monitoring of the MBS.

14. The method according to claim 9, further comprising:
monitoring the target control information at a target time domain position used to monitor the target control information.

15. The method according to claim 14, further comprising any one of:
in response to the target control information being monitored at the target time domain position, and in response to a bit value of the target control information being a first predefined value, determining that the target control information used to indicate to activate the reception monitoring of the MBS of the terminal is monitored; or
in response to the target control information being monitored at the target time domain position, and in response to a bit value of the target control information being a second predefined value, determining that the target control information used to indicate to deactivate the reception monitoring of the MBS of the terminal is monitored.

16. The method according to claim 14, further comprising any one of:
in response to the target control information being not monitored at the target time domain position, and in response to determining that the terminal is in a state of the reception monitoring of the MBS being stopped, starting the reception monitoring of the MBS based on the reception configuration information; or,
in response to the target control information being not monitored at the target time domain position, and in response to determining that the terminal is in a state of the reception monitoring of the MBS being started, stopping the reception monitoring of the MBS based on the reception configuration information.

17. The method according to claim 14, wherein an offset value of the target time domain position relative to a specified time domain position in each target cycle is a predetermined offset value.

18. The method according to claim 17, wherein a cycle duration of the target cycle is a positive integer multiple of a service monitoring cycle of the MBS or a positive integer multiple of a duration of a paging cycle.

19. The method according to claim 17, wherein the specified time domain position comprises at least one of:
a service-monitoring start position of the MBS, a paging-monitoring start position, or a change-starting indication position of a multicast control channel.

20. The method according to claim 9, wherein a number of MBSs is one or more, and in response to the number of the MBSs is more than one, reception configuration information corresponding to different MBSs are different.

21. The method according to any of claims 9 to 20, wherein the reception configuration information corresponding to the MBS comprises at least one of:
a service monitoring cycle of the MBS;
a first timer used to indicate a service monitoring duration in each service monitoring cycle;
a service-monitoring start position in each service monitoring cycle;
a second timer used to indicate that the network device has new data to be scheduled;
a third timer used to indicate the terminal to perform a hybrid automatic repeat request (HARQ) feedback; or
a fourth timer used to indicate the terminal to receive data re-transmitted by the network device.

22. The method according to claim 21, wherein starting the reception monitoring of the MBS comprises at least one of:
starting at least one of the first timer, the second timer, the third timer or the fourth timer;
starting monitoring of a control channel corresponding to the MBS; or
starting monitoring of a data channel corresponding to the MBS.

23. The method according to claim 21, wherein stopping the reception monitoring of the MBS comprises at least one of:
stopping or not starting at least one of the first timer, the second timer, the third timer or the fourth timer;
stopping monitoring of a control channel corresponding to the MBS; or
stopping monitoring of a data channel corresponding to the MBS.

24. An apparatus for switching control of a monitoring state, performed by a network device, comprising:
a configuring module, configured to configure reception configuration information corresponding to a multicast broadcast service (MBS) for a terminal, wherein the reception configuration information is used for the terminal to receive the MBS in a discontinuous reception mode; and
a sending module, configured to send target control information to the terminal, wherein the target control information is used to activate or deactivate reception monitoring of the MBS of the terminal.

25. An apparatus for switching control of a monitoring state, performed by a terminal, comprising:
a monitoring state switching module, configured to start or stop reception monitoring of a multicast broadcast service (MBS) based on an indication of received target control information and reception configuration information corresponding to the MBS configured by a network device for the terminal, wherein the target control information is used to activate or deactivate the reception monitoring of the MBS of the terminal, and the reception configuration information is used for the terminal to receive the MBS in a discontinuous reception mode.

26. A computer readable storage medium having computer programs stored thereon, wherein the computer programs are configured to perform the method for switching control of a monitoring state according to any of claims 1 to 8.

27. A computer readable storage medium having computer programs stored thereon, wherein the computer programs are configured to perform the method for switching control of a monitoring state according to any of claims 9 to 23.

28. A device for switching control of a monitoring state, comprising:
a processor; and
a memory for storing instructions executable by the processor;
wherein the processor is configured to perform the method for switching control of a monitoring state according to any of claims 1 to 8.

29. A device for switching control of a monitoring state, comprising:
a processor; and
a memory for storing instructions executable by the processor;
wherein the processor is configured to perform the method for switching control of a monitoring state according to any of claims 9 to 23.
